**Europäisches Patentamt**

**European Patent Office**

**Office européen des brevets**

(19)

(11) Numéro de publication : **0 585 156 A1**

(12) # DEMANDE DE BREVET EUROPEEN

(21) Numéro de dépôt : **93401958.9**

(22) Date de dépôt : **28.07.93**

(51) Int. Cl.⁵ : **C09D 133/06,**
// (C09D133/06, 163:02)

(30) Priorité : **29.07.92 FR 9209354**

(43) Date de publication de la demande :
**02.03.94 Bulletin 94/09**

(84) Etats contractants désignés :
**AT BE CH DE DK ES FR GB GR IE IT LI LU NL PT SE**

(71) Demandeur : **RHONE-POULENC CHIMIE**
**25, quai Paul Doumer**
**F-92408 Courbevoie Cédex (FR)**

(72) Inventeur : **d'Allest, Jean-François**
**7, rue Pierre Dupont**
**F-75010 Paris (FR)**
Inventeur : **Decloitre, Yves**
**45, rue Ribéra**
**F-75016 Paris (FR)**
Inventeur : **Larraillet, Philippe**
**6, rue du Général Leclerc**
**F-95210 Saint Gratien (FR)**

(74) Mandataire : **Seugnet, Jean Louis et al**
**RHONE-POULENC CHIMIE SERVICE**
**BREVETS CHIMIE 25 Quai Paul Doumer**
**F-92408 Courbevoie Cédex (FR)**

(54) **Liant pour une peinture aqueuse.**

(57)     La présente invention concerne un liant pour peinture acrylique en émulsion aqueuse comportant :
    a) 96 à 99,9 % (calculés sur la base du poids de l'extrait sec) d'une dispersion aqueuse de latex acrylique et,
    b) 0,1 à 4 %, de préférence 0,5 à 2 % (calculés sur la base du poids de l'extrait sec) d'une émulsion aqueuse d'une résine époxy aromatique au moyen d'un agent tensio-actif non ionique.
    Utilisation dudit liant pour préparer des peintures monocomposantes à lessivabilité et lavabilité améliorées.

EP 0 585 156 A1

La présente invention concerne un liant à base d'un latex de type acrylique pour une peinture émulsion(ou dispersion) aqueuse.

Les peintures du type ci-dessus sont bien connues et sont décrites en détail dans de nombreux documents brevets.

Un des problèmes majeurs rencontrés dans ce type de peinture formulée avec un faible taux de liant (CPV > CPV critique), est leur résistance à l'abrasion humide dénommée par la suite RAH.La mesure de la RAH permet de déterminer la lavabilité ou la lessivabilité des peintures.

Différentes tentatives d'amélioration de la RAH ont été publiées dans la littérature. Ainsi US-A 4.169.086 enseigne l'addition d'un sel particulier d'un acylester de l'acide hydroxyméthanesulfonique.

Le brevet EP-A 9110 enseigne l'addition d'un polyglycidyle à la peinture en vue d'améliorer la RAH.

EP-A 69 326, en vue d'améliorer l'adhésion humide ("wet adhesion") sur fond alkyde, enseigne l'addition de 0,2 à 10 % en poids d'un glycidylether ayant un indice époxy de 0,1 à 0,8 dans 90 à 99,8 % en poids d'une dispersion aqueuse d'un latex vinylique pour peinture à fort taux de liant (CPV < CPV critique).

Le glycidyléther utilisé tel quel et non en dispersion aqueuse dans le latex vinylique, est le produit de réaction de l'épichlorhydrine et d'un alcool aliphatique présentant de préférence lui-même un groupe époxy.

La dispersion aqueuse obtenue présente certes une "wet adhesion " améliorée, mais il est bien connu que l'introduction d'une résine époxy dans la dispersion aqueuse de latex est difficile et la peinture ainsi obtenue présente une stabilité au stockage insuffisante.

Dans ce qui suit ou ce qui précède, sauf indications contraires, les pourcentages et parties sont en poids.

Le but premier visé par la présente invention est précisément de proposer une peinture à base d'une dispersion aqueuse d'un latex de type acrylique présentant une RAH très améliorée associée à une très bonne stabilité au stockage.

Ce but est atteint par la présente invention qui propose en effet un liant pour peinture acrylique en émulsion aqueuse comportant:

a) 96 à 99,9 % (calculés sur la base du poids de l'extrait sec) d'une dispersion aqueuse de latex acrylique et,

b) 0,1 à 4 %, de préférence 0,5 à 2 % (calculés sur la base du poids de l'extrait sec) d'une émulsion aqueuse d'une résine époxy aromatique au moyen d'un agent tensio-actif non ionique.

La résine époxy aromatique est de préférence choisie parmi les résines époxy du type bisphénol, en particulier le bisphénol A, les résines époxy du type novolak et leurs mélanges.

Les résines époxy de type bisphénol A 2,2-bis(4'hydroxyphényl)-propane, est le produit de la réaction du bisphénol A sur l'épichlorohydrine.Ces résines sont des produits commercialement disponibles en particulier sous les marques déposées epikote (Shell), DER (dow Chemical), Araldite (Ciba), ERL (UCC).

Les résines époxy du type novolak sont également des produits commercialement disponibles en particulier sous les marques déposées Epikote (Shell), DEN (Dow Chemical), EPN (Ciba).

Il est recommandé d'utiliser une résine époxy de masse en équivalent époxy compris entre 160 et 2000 de préférence entre 180 et 300.

Ces résines époxy aromatiques peuvent être mises en émulsion, généralement sans difficultés, à l'aide d'agents tensio-actifs nonioniques. Comme tensio-actifs nonioniques utilisables on peut citer les polyéthers tels que les oxydes de polyéthylène et/ou de polypropylène, les éthers alkylaromatiques de polyéthylène et/ou de polypropylène glycol. D'autres tensio-actifs utilisables sont les dérivés polyoxyalkylene de l'hexitol incluant les sorbitans et les mannitans dont certains sont commercialisés sous la marque déposée "Tween" par Atlas Powder Company. D'autres tensio-actifs utilisables sont les adducts de polyoxyéthylène glycol et de polyéthers glycidyliques de phénols polyhydriques. On recommande selon l'invention d'utiliser 1 à 20 %, de préférence 3 à 10 %, en poids de tensioactif par rapport au poids de résine époxy aromatique lors de la mise en émulsion aqueuse de ladite résine.

Les résines aromatiques et les tensio-actifs utilisables sont en particulier décrits dans le brevet US 4.073.762 cité comme référence.

Selon un mode de réalisation particulier tout ou partie du polyoxyalkylène glycol, dont la partie alkylène droite ou ramifiée comporte entre 2 et 6 atomes de carbone, est greffé au moyen d'une liaison covalente sur la résine époxy aromatique.

La présente invention vise donc également un liant pour peinture acrylique en émulsion aqueuse comportant :

a) 96 à 99,9 % (calculés en sec) d'une dispersion aqueuse de latex.

b) 0,1 à 4 % de préférence 0,5 à 2 % (calculés en sec) d'une dispersion aqueuse d'une résine époxy qui est le produit d'addition de réactifs comportant :

a) un éther diglycidyle d'un dérivé phénolique dihydroxylé,

b) un dérivé phénolique dihydroxylé,

c) un éther diglycidyle d'un polyoxyalkylèneglycol.

2

Les composés a) et b) de la résine époxy peuvent contenir d'autres substituants du type alkyle, aryle, sulfonyle et similaires.

Les composés b) préférés sont le bisphénol A (2,2-bis (4-hydroxyphénylpropane) et le bis(4-hydroxyphénylméthane).

Les éthers diglycidyle a) sont préparés par réaction de b) avec un époxyde contenant un halogène selon par exemple l'enseignement des brevets US-A 2.582.985, US-A 2.615.007 et US-A 2.633.458.

La dispersion aqueuse de résine époxy est rendue stable par l'incorporation dans la résine d'un éther diglycidyle d'un polyoxyalkylène glycol c).

Le composé c) est préparé en faisant réagir l'épichlorhydrine avec un polyoxyalkylène glycol suivant un rapport molaire permettant d'obtenir c).

Les polyoxyalkylène glycols préférés sont ceux préparés par réaction d'oxyde d'éthylène et/ou d'oxyde de propylène avec un dialcool aliphatique tel que le glycol et présentant un poids moléculaire compris entre 5000 et 10000. La dispersion aqueuse b) comporte généralement 30 à 80 % de matière sèche, de préférence 50-70 % . La résine époxy en dispersion aqueuse dans b) comporte de préférence un poids moléculaire compris entre 500 et 20000.

De préférence, cette résine époxy est le produit d'addition de :

- 40 à 90 parties en poids de a),
- 3 à 35 parties en poids de b) et,
- 1 à 25 parties en poids de c).

Selon un mode de réalisation préféré et de façon à améliorer la stabilité de la dispersion aqueuse b), cette dispersion aqueuse peut comporter en outre une quantité stabilisatrice d'un diluant réactif d) à une teneur dans b) de préférence comprise entre 1 et 25, de préférence 5 à 20 % en poids par rapport au poids de résine époxy sèche contenue dans b).

Des exemples de diluants réactifs sont les hydrocarbures insaturés époxydés et des éthers glycidyle, d'alcools aliphatiques en $C_8$ - $C_{17}$ tels que l'éthyl-2 hexanol, le dodécanol et l'éicosanol.

De préférence, en vue d'améliorer sa stabilité au stockage, la peinture selon l'invention ainsi que le polymère constitutif du liant ne comporte pas de composé et/ou de groupement azoté tel qu'une amine primaire, secondaire ou tertiaire susceptible d'une part de réagir avec les époxy et/ou d'autre part, de catalyser la réaction entre les groupes époxy et les groupes carboxyliques éventuellement présents dans le polymère.

Les dispersions aqueuses b) de résine époxy utilisables dans le cadre de la présente invention sont plus particulièrement décrites dans le brevet US-A 4.315.044 cité comme référence.

La dispersion aqueuse de latex acrylique A) est n'importe quelle dispersion aqueuse connue de ce type utilisable dans les dispersions aqueuses de peinture.

Par dispersion aqueuse de peinture, on entend également les dispersions de consistance pâteuse telle qu'un mastic ou semi-fluide tel qu'un enduit.

Les monomères constitutifs du (co)polymère formant les particules de latex sont au minimum à base d'esters de l'acide acrylique ou méthacrylique dont le groupe alkyle présente de 1 à 8 de préférence de 1 à 4 atomes de carbone.

Par ailleurs, les monomères constitutifs du copolymère sont choisis de telle sorte que la température de transition vitreuse Tg du copolymère soit comprise entre -- - 30 et + 50°C de préférence entre - 5 et + 30°C. La mesure de la Tg est déterminée par analyse enthalpique différentielle (DSC = "Differential Scanning Calorimetry).

La chaîne du copolymère est de préférence formée d'un enchaînement de monomères "durs" tels que le styrène et le méthacrylate de méthyle, associés à des monomères "mous" tels l'acrylate d'éthyle, l'acrylate de propyle ou l'acrylate de n-butyle et l'acrylate d'éthyl-2 hexyle.

L'homme de l'art sait parfaitement choisir la nature et la quantité de monomères pour aboutir à la Tg désirée. Des exemples de copolymères utilisables sont notamment:

- un copolymère styrène/acrylate d'éthyle présentant une Tg comprise entre 0°C et + 20°C lorsque le rapport pondéral styrène/acrylate d'éthyle est compris entre 26/74 et 45/55 ;
- un copolymère styrène/acrylate d'éthyle-2 héxyle présentant une Tg variant entre 5 et + 30°C lorsque le rapport styrène/acrylate d'éthyle-2 héxyle varie de 50/50 à 60/40 ;
- un copolymère styrène/acrylate de n-butyle ayant une Tg variant entre - 5 et + 40°C pour un rapport styrène /acrylate de n-butyle variant de 36/60 à 50/50. On recommande d'utiliser également au moins un des autres monomères suivants :
- 0,1 à 5 % en poids par rapport au poids total des monomères de dicyclopentadiènyl(méth)acrylate ou le diméthacrylate d'éthylène glycol.
- 0,1 à 5 % en poids d'un acide carboxylique à insaturation éthylénique tel l'acide acrylique, méthacrylique, maléique, fumarique et itaconique ainsi que les amides correspondants,

- 0,1 à 5 % en poids de monomère sulfonate ou sulfate à insaturation éthylénique tel que le méthallylsulfonate.

Les dispersions aqueuses acryliques A sont obtenues par polymérisation en émulsion aqueuse desdits monomères éventuellement en mélange avec un monomère stabilisant au sein d'un milieu stable généralement à pH alcalin.

Ledit milieu de polymérisation comprend outre lesdits monomères, une phase aqueuse et divers adjuvants classiques de polymérisation en émulsion (catalyseurs, émulsifiants...) ces derniers étant choisis parmi ceux qui sont stables en un milieu alcalin.

On peut citer comme exemple de catalyseurs : les hydroperoxydes organiques tels que ceux de cumène, diisopropylbenzène, paramenthane...les persulfates tels que ceux de sodium, potassium ou ammonium.

Parmi les émulsifiants pouvant être présents on peut citer les agents anioniques tels que : les sels d'acides gras, les alkylsulfates, alkylarylsulfonates, les sulfosuccinates, les alkylphosphates de métaux alcalins ; les agents non ioniques tels que les alcools gras polyéthoxylés, les alkylphénolspolyéthoxylés, les acides gras polyéthoxylés.

La dispersion aqueuse A pourra contenir de 20 à 65 % en poids de matière sèche et de préférence de 40 à 55 % en poids de matière sèche, avec un diamètre de particules compris entre 0,05 et 2 $\mu$m.

Les dispersions aqueuses de peinture selon l'invention ont de préférence un pH compris généralement entre 3 et 9 de préférence entre 6 et 8. En effet des pH trop acides ou basiques pourrait entraîner une réticulation spontanée de la peinture et/ou de la résine époxy.

La dispersion de peinture selon l'invention comporte les adjuvants classiques utilisés habituellement tels que les agents dispersants, épaississants, stabilisants, anti-mousse, anti-gel, de coalescence, fongicide, des matières pulvérulentes insolubles dans les dispersions A) et B), finement divisées et dispersées et qui sont classiquement formées de pigments et de charges.

Des pigments typiquement utilisables sont le dioxyde de titane (rutile ou anatase) et les barytes associés éventuellement à de l'oxyde de zinc...Ces pigments blancs peuvent être associés à des pigments de coloration classique. Les charges utilisables sont notamment le carbonate de calcium, la silice, le talc, le sulfate de calcium. La quantité de pigments à mettre en oeuvre est fonction du type de peinture désiré. La quantité de pigment peut varier de 10 à 90 % par rapport au poids de matières pulvérulentes suivant que l'on veut préparer une peinture mate ou une peinture brillante.

On incorpore ensuite à la partie pigmentaire le liant.

Il est recommandé que les quantités utilisées des différents composants de la dispersion de peinture selon l'invention soient telles que la concentration pigmentaire volumique (CPV) soit compris entre 15 et 90 %, de préférence entre 60 et 84 %.

Le CPV est le rapport du volume de matières pulvérulentes (soit pigments + matières de charges) sur le volume de l'extrait sec total de la peinture (extrait sec de la dispersion A + extrait sec de la dispersion B + matières pulvérulentes sèches + adjuvants secs).

Le liant selon l'invention, ainsi que la peinture faite à partir du liant possèdent une excellente stabilité au stockage sans évolution notable de la viscosité au cours du temps à partir du moment où on respecte la limite haute de 4 % de résine époxy par rapport au latex acrylique et que l'on mélange bien la dispersion de latex avec une émulsion de résine aromatique.

Par ailleurs, le liant selon l'invention améliore considérablement la lavabilité et la léssivabilité si on respecte la limite basse de 0,1 % de résine époxy par rapport au latex acrylique.

A une teneur de 0,1 %, l'effet bénéfique est bien décelable et devient important à partir de 0,5 %.Au delà de 4 % les améliorations apportées à la RAH ne sont pas décelables. Par contre, la stabilité au stockage du liant et/ou de la peinture se dégradent et la peinture a de plus tendance à jaunir au viellissement.

Les exemples suivants illustrent l'invention sans en limiter la portée.


**EXEMPLE 1 :**


a) *Dispersions aqueuses A)* :

On prépare tout d'abord par le procédé de polymérisation radicalaire en émulsion deux dispersions aqueuses A$_1$ et A$_2$ d'un copolymère acrylique à partir des produits de départ suivants :
- pour la dispersion aqueuse A$_1$ :

| | |
|---|---|
| styrène | 48,7 parties en poids, |
| acrylate de n-butyle | 48,6 parties en poids, |
| acide acrylique | 4,7 parties en poids, |
| acrylamide | 0,5 parties en poids, |

| méthallylsulfonate | 0,5 parties en poids, |
| émulsifiant | alkylsulfonate de sodium, |
| catalyseur | persulfate d'ammonium, |
| diamètre des grains de latex | 0,15 μm, |
| Tg | 35°C, |
| Extrait sec (ES) | 50%, |

- pour la dispersion aqueuse $A_2$ :

| styrène | 36,7 parties en poids, |
| acrylate de n-butyle | 60,0 parties en poids, |
| acide acrylique | 3,3 parties en poids, |
| acrylamide | 0,5 parties en poids, |
| métallylsulfonate | 0,5 parties en poids, |
| catalyseur | persulfate d'ammonium, |
| émulsifiant | alkylsulfonate de sodium, |
| diamètre des grains de latex | 0,15 μm, |
| Tg | 5°C, |
| Extrait sec (ES) | 50%. |

b) *Dispersions aqueuses B)* :

On utilise 2 dispersions différentes $B_1$ et $B_2$ commercialisées par la Société Hi-Tek Polymers respectivement sous les dénominations commerciales CMD W 60-3515 et Epi-Rez 35201 ayant les caractéristiques suivantes :

| | ES (%) | MEE (1) | Tg | Viscosité (2) | pH |
|---|---|---|---|---|---|
| $B_1$ | 63 | 250 | 7°C | 11000 | 3,7 |
| $B_2$ | 60 | 700 | 32°C | 11000 | 8,0 |

(1) MEE : Masse en équivalent époxy basée sur la résine sèche.

(2) Viscosité : Viscosité Brookfield en mPa.s à 25°C - aiguille 5 à 10 t/mn.

Les résines époxy de $B_1$ et $B_2$ sont le produit d'addition de diglycidyléther de bisphénol A, de bisphénol A et de diglycidyléther, d'un copolymère d'oxyde d'éthylène et d'oxyde de propylène.

c) Préparation du liant L:

II. On prépare les liants $L_1$ à $L_4$ ayant les compositions suivantes :

| $L_0$ (A1) | = $A_1$ seul (témoin), |
| $L_0$ ($A_2$) | = $A_2$ seul (témoin), |
| $L_1$ | = $A_1$ + $B_1$ (97,5 % + 2,5 %), |
| $L_2$ | = $A_1$ + $B_2$ (97,5 % + 2,5 %), |
| $L_3$ | = $A_1$ + $B_1$ (99,0 % + 1,0 %), |
| $L_4$ | = $A_1$ + $B_2$ (99,0 % + 1,0 %), |
| $L_5$ | = $A_2$ + $B_1$ (99,0 % + 1,0 %). |

Tous les pourcentages donnés sont calculés sur la base du poids des extraits secs contenus dans A et B.

d) *Préparation de la peinture* :

$d_1$) à partir de $A_1$ :

Dans le disperseur pour peinture où se trouve déjà le liant L, on mélange les adjuvants et matières pulvérulentes indiquées dans le tableau 1 ci-après :

## TABLEAU 1

| Composant | Partie en poids | Fabricant |
|---|---|---|
| Eau | 11,3 | - |
| Tylose MH 6000 XP(2% $H_2O$) | 19,4 | (Hoechst) |
| Coatex P90 sel de copolymère acrylique en solution aqueuxe | 0,3 | (Coatex) |
| Proxel GXL | 0,15 | (I.C.I.) |
| Nopco 8034 antimousse | 0,1 | (Henkel-Nopco) |
| $TiO_2$ (RL 68) | 5,3 | (Thann et Mulhouse) |
| Durcal 5 carbonate de calcium (granulométrie moyenne < 5µm) | 32 | (Omya) |
| Omyalite 90 carbonate de calcium (granulométrie moyenne < 1µm) | 21,3 | (Omya) |
| Dowanol DPnB agent de coalescence | 2 | (Dow) |
| Liant L | 8,6 | (Rhône-Poulenc) |

On ajoute et on mélange les ingrédients dans l'ordre indiqué dans le tableau. Dans le tableau 1, le liant L représente $Lo(A_1)$ et $L_1$ à $L_4$ inclus, à partir desquelles on prépare les peintures $Po(A_1)$ et $P_1$ à $P_4$ présentant toutes:

- une concentration pigmentaire volumique (CPV) de 84 %,
- un extrait sec (ES) de 63,4 %,
- un pourcentage en poids de Liant (%L) par rapport au poids total de la peinture de 8,6 %.

$d_2$) à partir de $A_2$ :

On procède comme pour $A_1$ sauf que les peintures sont préparées sans agent de coalescence et ont la composition indiquée au tableau 2 ci-après :

## TABLEAU 2

| Composant | Parties en poids | Fabricant |
|---|---|---|
| Eau | y | - |
| Tylose MH 6000 XP(2%/$H_2O$) | 19,4 | (Hoechst) |
| Coatex P90 | 0,3 | (Coatex) |
| Proxel GXL | 0,15 | (I.C.I.) |
| Clerol LSB 908 | 0,1 | (Henkel-Nopco) |
| $TiO_2$ (RL 68) | 5,3 | (Thann et Mulhouse) |
| Durcal 5 | 32 | (Omya) |
| Omyalite 90 | 21,3 | (Omya) |
| Liant L | x | (Rhône-Poulenc) |

On prépare les peintures $Po(A_2)$ et $P_5$ à partir des liants $Lo(A_2)$ et $L_5$ et de plus on prépare deux peintures $Po(A_2)$ (75), $Po(A_2)$ (80) et $P_5$ (75), $P_5$ (80) de CPV différents en faisant varier x et y suivant le tableau 3 suivant :

**TABLEAU 3**

| Peintures | CPV (%) | X | Y | E.S.(%) | % L |
|-----------|---------|------|------|---------|------|
| Po(A$_2$) (75) | 75 | 15 | 11,9 | 63,4 | 14,2 |
| P$_5$ (75) | 75 | 15 | 11,9 | 63,4 | 14,2 |
| Po(A$_2$) (80) | 80 | 11,3 | 12,7 | 63,4 | 11 |
| P$_5$ (80) | 80 | 11,3 | 12,7 | 63,4 | 11 |

e) évaluation des peintures :

Sur les peintures obtenues, on effectue les 2 types d'essais suivants :
- essai de stabilité des peintures : un échantillon de peinture contenu dans un récipient à l'abri de l'air est porté à 55°C pendant 28ours. La stabilité (S) de la peinture est donnée par le rapport des viscosités Brookfield des peintures mesurées à 50 t/mn à 20°C au bout de 30 jours (VF) sur la viscosité intiale (VI).
- essai de résistance à l'abrasion humide (RAH). Elle est effectuée à l'aide d'un abrasimètre selon la norme DIN 53778 et est évaluée en nombre de cycles au bout desquels la peinture est érodée.

Les résultats obtenus sont rassemblés dans le tableau 4 ci-après :

## TABLEAU 4

| Peinture | VI mPa.s | S | RAH (cycles) |
|----------|----------|------|--------------|
| Po (A$_1$) | 4200 | 1,15 | 1660 |
| P$_1$ | 4360 | 1,15 | A.A. (1) |
| P$_2$ | 4320 | 1,15 | 4230 |
| P$_3$ | 4600 | 1,1 | A.A. (1) |
| P$_4$. | 4160 | 1,15 | 2240 |
| Po (A$_2$) (75) | 3920 | 1,1 | 630 |
| P$_5$ (75) | 4480 | 1,15 | 3200 |
| Po (A$_2$) (80) | 4440 | 1,15 | 270 |
| P$_5$ (80) | 4320 | 1,15 | 1300 |

(1) :aucune abrasion décelable.

Du tableau 4, il apparaît que les peintures selon l'invention, par rapport aux peintures témoin sans résine époxy, présentent une RAH considérabiement améliorée sans présenter de baisse sensible de stabilité.

**Revendications**

1. Liant pour pour peinture acrylique en émulsion ou dispersion aqueuse, caractérisé en ce qu'il comporte :
   A) de 96 à 99,9 % (calculés sur la base du poids de l'extrait sec) d'une dispersion aqueuse de latex acrylique et,
   B) de 0,1 à 4%, de préférence de 0,5 à 2 % (calculés sur la base de l'extrait sec) d'une émulsion aqueuse d'une résine époxy aromatique comportant un agent tensio-actif non-ionique.

7

**2.** Liant selon la revendication 1, caractérisé en ce que la résine époxy aromatique est choisie parmi les résines époxy de type bisphénol, les résines époxy de type novolak et leurs mélanges.

**3.** Liant selon la revendication 1 ou 2, caractérisé en ce que les agents tensio-actifs de l'émulsion B sont des polyoxyalkylène glycol dont la partie alkylène droite ou ramifiée comporte entre 2 et 6 atomes de carbone, tout ou partie de ces agents étant greffés sur la résine époxy aromatique.

**4.** Liant selon l'une quelconque des revendications 1 à 3, caractérisé en ce que la résine époxy a une masse en équivalent époxy compris entre 160 et 2000, de préférence entre 180 et 300.

**5.** Liant selon l'une quelconque des revendications 1 à 4 pour dispersion aqueuse de peinture acrylique, caractérisé en ce que la résine époxy de l'émulsion B est une résine époxy qui est le produit d'addition de réactifs comportant :
   a) un éther diglycidyle d'un dérivé phénolique dihydroxylé,
   b) un dérivé phénolique dihydroxylé,
   c) un éther diglycidyle d'un polyoxyalkylène glycol.

**6.** Liant selon la revendication 5, caractérisé en ce que la résine époxy est le produit d'addition de :
   - 40 à 90 parties en poids de a),
   - 3 à 35 parties en poids de b) et,
   - 1 à 25 parties en poids de c).

**7.** Liant selon la revendication 5 ou 6, caractérisé en ce que le composé b) est choisi parmi le bisphénol A et le bis(4-hydroxyphénylméthane).

**8.** Liant selon l'une quelconque des revendications 5 à 7, caractérisé en ce que le composé c) est le produit de la réaction de l'épichlorhydrine sur un polyoxyalkylène glycol de poids moléculaire compris entre 5000 et 10000.

**9.** Liant selon l'une quelconque des revendications précédentes, caractérisé en ce que la dispersion aqueuse B) comporte 30 à 80 % de matière sèche.

**10.** Liant selon l'une quelconque des revendications 5 à 8 caractérisé en ce que la résine époxy a un poids moléculaire compris entre 500 et 20000.

**11.** Liant selon l'une quelconque des revendications précédentes caractérisé en ce que la dispersion aqueuse B) contient en outre 1 à 25 % en poids, par rapport au poids de résine époxy sèche d'un diluant réactif choisi parmi les hydrocarbures époxydés et les éthers glycidyle d'alcools aliphatiques en $C_8$-$C_{17}$.

**12.** Liant selon l'une quelconque des revendications précédentes caractérisé en ce que le polymère constitutif du liant ne comporte pas de composé et/ou de groupement azoté tel qu'une amine primaire, secondaire ou tertiaire susceptible d'une part de réagir avec les époxy e/ou, d'autre part, de catalyser la réaction entre les groupes époxy et les groupes carboxyliques éventuellement présents dans le polymère.

**13.** Liant selon l'une quelconque des revendications 1 à 12, caractérisé en ce que le (co)polymère formant le latex acrylique à une Tg comprise entre - 30 et + 50°C et résulte de la copolymérisation radicalaire en émulsion de styrène et de (méth)acrylate d'alkyle dont la partie alkyle a de 1 à 8 atomes de carbone en présence éventuellement de 0,1 à 5 % en poids calculés par rapport au poids total des monomères d'au moins un autre monomère choisi parmi :
   - le dicyclopentadiènyl(meth)acrylate ou le diméthacrylate d'éthylèneglycol,
   - l'acide meth(acrylique), maléique, fumarique et itaconique et les amides correspondants,
   - un monomère sulfate ou sulfonate à insaturation éthylénique en particulier le méthallylsulfonate.

**14.** Peinture émulsion ou dispersion acrylique à lessivabilité et lavabilité améliorées contenant des adjuvants et des matières pulvérulentes, caractérisée en ce qu'elle contient un liant tel que défini à l'une quelconque des revendications 1 à 13.

Office européen
des brevets

**RAPPORT DE RECHERCHE EUROPEENNE**

Numero de la demande

EP    93 40 1958

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 954 358 (HURWITZ)<br>* colonne 2, ligne 40 - ligne 65; revendication 1 *<br>--- | 1 | C09D133/06<br>//(C09D133/06,16<br>3:02) |
| A | DE-A-2 520 273 (BASF FARBEN & FASERN AG)<br>* revendications 1-3 *<br><br>----- | 1 | |

**DOMAINES TECHNIQUES RECHERCHES (Int. Cl.5)**

C09D

Le présent rapport a été établi pour toutes les revendications

| Lieu de la recherche | Date d'achèvement de la recherche | Examinateur |
|---|---|---|
| LA HAYE | 26 OCTOBRE 1993 | Dieter Schüler |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 01.82 (P0402)